# EUROPÄISCHE PATENTANMELDUNG

(11) **EP 3 629 221 A1**
(43) Veröffentlichungstag der Anmeldung: **01.04.2020**
(21) Anmeldenummer: 18197229.0
(22) Anmeldetag: 27.09.2018
(51) Int. Cl.: G06K 7/10, G01S 1/70, G05D 1/02, G06K 19/06

(54) **LANDMARKENBAND UND LANDMARKENSPENDER**

(71) Anmelder: Siemens Aktiengesellschaft, 80333 München (DE)
(72) Erfinder: Feiten, Wendelin, 85579 Neubiberg (DE); Wösch, Thomas, 81241 München (DE)

(57) **Zusammenfassung**

Auf einem erfindungsgemäßen Landmarkenband (LMB) sind maschinenlesbare Strukturen (RA, NRA) zur räumlichen Orientierung von Robotern (RO), Fahrzeugen oder anderen sich orientierenden Systemen aufgebracht. Das Landmarkenband (LMB) weist eine Vielzahl von Trennstellen (TR) zum Abtrennen von als Landmarken verwendbaren Bandsegmenten (BS1, BS2) wählbarer Größe auf. Dabei sind die maschinenlesbaren Strukturen (RA, NRA) in zufälliger Weise über das Landmarkenband (LMB) verteilt.

Ein erfindungsgemäßer Landmarkenspender (SP) verfügt über eine Trennvorrichtung (SK) zum Abtrennen von Bandsegmenten (BS1, BS2) eines Landmarkenbandes (LMB). Hierbei kann auf Trennstellen im Landmarkenband (LMB) selbst verzichtet werden.

## Beschreibung

Mobile und insbesondere autonome Roboter müssen häufig ihre eigene Position und/oder Ausrichtung bezüglich ihrer Einsatzumgebung ermitteln, d.h. sich in ihrer Umgebung orientieren, um zuverlässig navigieren und agieren zu können. Das gleiche gilt für viele Fahrzeuge oder andere sich orientierende Systeme, wie z.B. selbstjustierende chirurgische Instrumente.

Zur Orientierung werden oft Sensoren, wie beispielsweise Laserscanner oder Kameras verwendet, mittels derer in der Umgebung vorkommende oder spezifisch zu diesem Zweck angebrachte Merkmale, sogenannte Landmarken erkannt werden. Anhand der erkannten Landmarken kann dann die eigene Orientierung bezüglich dieser Landmarken abgeleitet werden.

Oftmals reichen jedoch in der Umgebung natürlich vorkommende Landmarken nicht für eine zuverlässige Orientierung aus. In solchen Fällen werden üblicherweise künstliche Landmarken in der Umgebung gezielt angebracht. Derartige künstliche Landmarken sollten maschinenerkennbar, maschinenlesbar, voneinander unterscheidbar und möglichst genau lokalisierbar sein. Weiterhin sollten sie sich über die Zeit nicht wesentlich verändern.

Es ist bekannt, unterschiedliche geometrische Muster zu erzeugen und auszudrucken, und die Ausdrucke als Landmarken in der Einsatzumgebung anzubringen. Nachteilig ist hierbei, dass jeweils ein Satz mit einer Vielzahl unterschiedlicher Marker bereitzuhalten ist. Insofern die Marker in der Regel nicht aus jeder Entfernung gleich gut zu erkennen und zu identifizieren sind, sind häufig, je nach Einsatzbedingungen, Markersätze unterschiedlicher Größe vorzuhalten.

Es ist Aufgabe der vorliegenden Erfindung, ein Landmarkenband und einen Landmarkenspender anzugeben, die eine orientierungsunterstützende Präparierung einer Einsatzumgebung von Robotern, Fahrzeugen und anderen sich orientierenden Systemen vereinfachen.

Gelöst wird diese Aufgabe durch ein Landmarkenband mit den Merkmalen des Patentanspruchs 1 sowie durch einen Landmarkenspender mit den Merkmalen des Patentanspruchs 9.

Erfindungsgemäß ist ein Landmarkenband mit aufgebrachten maschinenlesbaren Strukturen zur räumlichen Orientierung von Robotern, Fahrzeugen oder anderen sich orientierenden Systemen vorgesehen. Das Landmarkenband weist eine Vielzahl von Trennstellen zum Abtrennen von als Landmarken verwendbaren Bandsegmenten wählbarer Größe auf. Dabei sind die maschinenlesbaren Strukturen in zufälliger Weise über das Landmarkenband verteilt.

Weiterhin ist ein erfindungsgemäßer Landmarkenspender mit einem Landmarkenband mit aufgebrachten maschinenlesbaren Strukturen zur räumlichen Orientierung von Robotern, Fahrzeugen oder anderen sich orientierenden Systemen vorgesehen. Der Landmarkenspender verfügt über eine Trennvorrichtung zum Abtrennen von als Landmarken verwendbaren Bandsegmenten des Landmarkenbandes. Dabei sind die maschinenlesbaren Strukturen in zufälliger Weise über das Landmarkenband verteilt.

Durch die zufällige, insbesondere pseudozufällige oder quasizufällige Verteilung der maschinenlesbaren Strukturen unterscheiden sich abgetrennte Bandsegmente mit einer Wahrscheinlichkeit, die mit einer Größe oder Länge des jeweiligen Bandsegments in der Regel stark zunimmt. Damit kann ein Benutzer durch einfaches Abtrennen von Bandsegmenten geeigneter Größe Landmarken erhalten, die mit hinreichender Wahrscheinlichkeit voneinander unterscheidbar sind. Wenn beispielsweise in kleinen Räumen nur wenige Landmarken anzubringen sind, müssen auch nur wenige Landmarken unterschieden werden. Demnach können in einem solchen Fall kürzere Bandsegmente als Landmarken verwendet werden. Wenn dagegen z.B. in größeren Räumen oder im Freien eine größere Zahl an Landmarken anzubringen ist, können ohne Weiteres längere Bandsegmente abgetrennt und als Landmarken verwendet werden. Die Bandsegmente können somit in einer Vielzahl unterschiedlicher Einsatzumgebungen als Landmarken verwendet werden. Ein wesentlicher Vorteil ist insbesondere darin zu sehen, dass kein größerer Vorrat von a-priori verschiedenen Markern benötigt wird, um unterschiedliche Einsatzumgebungen zu präparieren. Stattdessen kann dasselbe Landmarkenband für unterschiedliche Umgebungen und Einsatzzwecke verwendet werden.

Vorteilhafte Ausführungsformen und Weiterbildungen der Erfindung sind in den abhängigen Ansprüchen angegeben.

Nach einer vorteilhaften Ausführungsform der Erfindung kann das Landmarkenband, insbesondere auf einer Achse, Spule, Röhre oder Trommel zu einer Rolle aufgewickelt sein.

Weiterhin kann eine geometrische Anordnung, eine geometrische Form, ein geometrisches Muster, eine Reflektivität, eine Leuchtkraft und/oder eine Farbe der maschinenlesbaren Strukturen, insbesondere in einer Dimension oder in zwei Dimensionen zufallsverteilt sein. Dabei können die maschinenlesbaren Strukturen insbesondere zufallsverteilte Reflektoren, wie z.B. sogenannte Katzenaugen, spiegelnde Flächen oder aktiv leuchtende Bandabschnitte umfassen.

Darüber hinaus können die maschinenlesbaren Strukturen geometrische Muster unterschiedlicher Größe und/oder unterschiedlichen Typs aufweisen. Dies erlaubt es in vielen Fällen, dass die maschinenlesbaren Strukturen aus unterschiedlichen Entfernungen identifiziert werden können.

Vorteilhafterweise können die maschinenlesbaren Strukturen zwischen benachbarten Trennstellen befindliche Bandabschnitte mit im Wesentlichen einheitlicher Reflektivität umfassen, wobei die Reflektivitäten verschiedener solcher Bandabschnitte zufallsverteilt sind. Derartige einheitlich gefärbte Bandabschnitte können durch Laserscanner oder Kameras in der Regel besonders zuverlässig erkannt werden.

Weiterhin können die maschinenlesbaren Strukturen wie ein Barcode, ein QR-Code und/oder ein Aruco-Marker ausgestaltet sein. In diesem Fall kann eine Vielzahl von handelsüblichen Scannern oder Erkennungsverfahren zur Identifikation der Bandsegmente genutzt werden.

Gemäß einer vorteilhaften Ausführungsform der Erfindung kann ein Befestigungsmittel, insbesondere eine Klebeschicht, eine Klebefolie, eine Magnetschicht und/oder ein Klettverschlussband zum Befestigen eines jeweiligen abgetrennten Bandsegments in einer zur räumlichen Orientierung vorgesehenen Umgebung vorgesehen sein. Das Befestigungsmittel kann vorzugsweise auf einer den maschinenlesbaren Strukturen abgewandten Seite des Landmarkenbandes angebracht sein.

Ausführungsbeispiele der Erfindung werden nachfolgend anhand der Zeichnung näher erläutert. Dabei zeigen jeweils in schematischer Darstellung:
- Figur 1: ein erfindungsgemäßes Landmarkenband,
- Figur 2: einen erfindungsgemäßen Landmarkenspender, und
- Figur 3: einen mobilen Roboter beim Navigieren anhand von in seiner Umgebung angebrachten Landmarken.

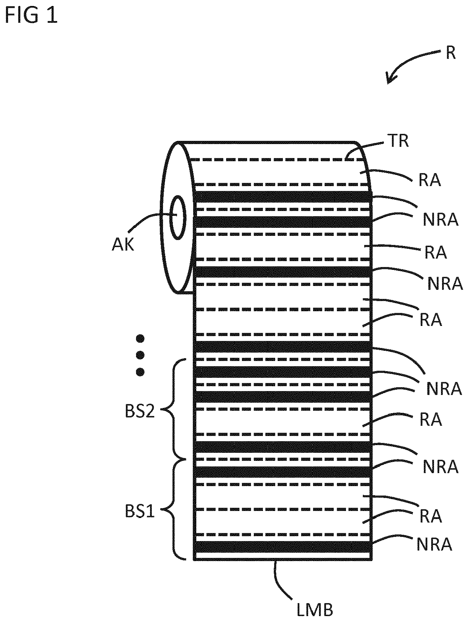

Figur 1 zeigt in schematischer Darstellung ein erfindungsgemäßes Landmarkenband LMB mit aufgebrachten maschinelesbaren Strukturen RA und NRA, die zur räumlichen Orientierung von mobilen, insbesondere autonomen Robotern, Fahrzeugen oder anderen sich orientierenden Systemen oder Vorrichtungen dienen.

Als räumliche Orientierung sei in diesem Zusammenhang insbesondere eine Feststellung, Ermittlung oder Erfassung einer Position und/oder Ausrichtung des sich orientierenden Systems bezüglich einer Einsatzumgebung verstanden. Für das vorliegende Ausführungsbeispiel sei angenommen, dass das sich orientierende System ein autonomer mobiler Roboter ist.

Das Landmarkenband LMB ist auf einem vorzugsweise zylinderförmigen Abrollkörper AK, beispielsweise einer Spule, Röhre oder Trommel, zu einer Rolle R aufgewickelt. Der Abrollkörper AK weist vorzugsweise eine Öffnung zum Aufstecken auf eine Achse einer Abrolleinrichtung auf. Darüber hinaus kann eine Rollenöffnung der Rolle R zu diesem Zweck auch freigelassen werden.

Das Landmarkenband LMB weist eine Vielzahl von in regelmäßigen, vorzugsweise äquidistanten Abständen angebrachten Trennstellen TR auf, die in Figur 1 durch strichlierte Linien veranschaulicht sind. Die Trennstellen TR sind derart ausgestaltet, dass an diesen Trennstellen TR Bandsegmente des Landmarkenbandes LMB leicht manuell abgetrennt werden können. Die Trennstellen TR sind vorzugsweise jeweils durch eine Perforation des Landmarkenbandes LMB realisiert.

Im vorliegenden Ausführungsbeispiel sind die maschinenlesbaren Strukturen durch reflektierende Bandabschnitte RA und nicht oder weniger reflektierende Bandabschnitte NRA realisiert. Die Bandabschnitte RA und NRA bilden jeweils eine zwischen benachbarten Trennstellen TR angeordnete Fläche mit im Wesentlichen einheitlicher Reflektivität. Vorzugsweise können die reflektierenden Bandabschnitte RA von einheitlich weißer Farbe und die nicht reflektierenden Bandabschnitte NRA von einheitlich schwarzer Farbe sein. Derartige Strukturen sind durch Laserscanner oder Kameras besonders einfach zu erkennen. Alternativ oder zusätzlich können die Bandabschnitte durch verschiedene Farben, Formen, Breiten, Längen und/oder Abstände gekennzeichnet oder markiert sein. Darüber hinaus können auch Reflektoren, wie z.B. sogenannte Katzenaugen, spiegelnde Flächen oder aktiv leuchtende Bandabschnitte als maschinenlesbare Strukturen vorgesehen sein.

Erfindungsgemäß sind die Reflektivitäten, Einfärbungen bzw. andere Kennzeichnungen verschiedener solcher Bandabschnitte über das Landmarkenband LMB hinweg zufallsverteilt. Unter einer solchen Zufallsverteilung ist insbesondere eine anhand von Zufallszahlen, Pseudozufallszahlen und/oder Quasizufallszahlen abgeleitete Verteilung, Anordnung oder Wahl der Reflektivitäten oder anderer Kennzeichnungen der verschiedenen Bandabschnitte zu verstehen. So kann ein jeweiliger Bandabschnitt mit einer vorgebbaren Wahrscheinlichkeit p von beispielsweise 0.5 schwarz eingefärbt bzw. mit einer Wahrscheinlichkeit von 1-p weiß belassen werden.

Alternativ oder zusätzlich kann eine sogenannte quasizufällige Verteilung vorgesehen sein, die gezielt so konstruiert wird, dass beliebige Folgen aufeinanderfolgender Bandabschnitte mit möglichst hoher oder zumindest hinreichend hoher Wahrscheinlichkeit nicht übereinstimmen. Derartige quasizufällige Verteilungen werden häufig auch als sub-random-Verteilungen oder low-discrepancy-Verteilungen bezeichnet.

Die Folge der Bandabschnitte RA und NRA kann damit als eine zufällige oder quasizufällige Folge von Nullen (z.B. für die nicht reflektierenden Bandabschnitte) und Einsen (z.B. für die reflektierenden Bandabschnitte) interpretiert werden. Ein mehrere Bandabschnitte umfassendes Bandsegment ergibt somit eine individuelle Kodierung, die mit in der Regel hinreichend großer Wahrscheinlichkeit von den Kodierungen anderer Bandsegmente verschieden ist. Offensichtlich steigt diese Wahrscheinlichkeit mit der Länge eines jeweiligen Bandsegments stark an.

Durch den Benutzer können an den Trennstellen TR auf einfache Weise Bandsegmente mit ad-hoc wählbarer Länge manuell abgetrennt werden. Je länger die abgetrennten Bandsegmente sind, desto höher ist die Wahrscheinlichkeit, dass sich deren Kodierungen unterscheiden. In Figur 1 sind beispielhaft zwei derartige Bandsegmente BS1 und BS2 dargestellt. Erfindungsgemäß können diese abgetrennten Bandsegmente, hier BS1 und BS2, als Landmarken verwendet werden, die in einer Umgebung des mobilen Roboters anzubringen sind, so dass sich der mobile Roboter daran räumlich orientieren kann.

Ein wesentlicher Aspekt ist hierbei, dass der Benutzer aufgrund der bandsegmentübergreifenden Zufallsverteilung der Bandabschnitte RA und NRA auf einfache Weise durch Abtrennen eines mehr oder weniger langen Bandsegments von der gleichen Rolle R vor Ort und ad hoc wählen kann, wie gering die Wahrscheinlichkeit einer zufälligen Übereinstimmung verschiedener Landmarken sein soll. Wenn beispielsweise in kleinen Räumen nur wenige Landmarken anzubringen sind, müssen nur wenige Kodierungen unterschieden werden können. Demnach können in einem solchen Fall kürzere Bandsegmente als Landmarken verwendet werden. Wenn dagegen z.B. in größeren Räumen oder im Freien eine größere Zahl an Landmarken anzubringen ist, können ohne Weiteres längere Bandsegmente von derselben Rolle R abgetrennt und als höchstwahrscheinlich unterscheidbare Landmarken angebracht werden.

Somit wird bei Nutzung der Erfindung kein größerer Vorrat von a-priori unterschiedlichen Markern benötigt, um unterschiedliche Einsatzumgebungen zu präparieren.

Im vorliegenden Ausführungsbeispiel weist das Landmarkenband LMB gewissermaßen einen über die gesamte Bandlänge fortlaufenden Barcode auf. Alternativ oder zusätzlich können als maschinenlesbare Strukturen auch QR-Codes und/oder Aruco-Marker auf dem Landmarkenband aufgebracht sein.

Weiterhin können zufallsverteilte Streifen größer Breite und/oder größere zufallsverteile Muster vorgesehen sein, damit eine jeweilige Landmarke auch aus größerer Entfernung erkannt und identifiziert werden kann.

Ungeachtet dessen kann aus einer erfindungsgemäßen Landmarke häufig auch dann eine Information abgeleitet werden, wenn die maschinenlesbaren Strukturen aus größerer Entfernung nicht mehr einzeln aufgelöst werden können. Wird eine Landmarke aus einer solchen Entfernung z.B. durch einen Strahl eines Laserscanners erfasst, so fallen in der Regel mehrere Bandabschnitte RA und/oder NRA in den Strahl, so dass ein Mittelwert der über den Strahl integrierten Reflektivitäten gemessen wird. Da die Reflektivitäten zufallsverteilt sind, sind die jeweiligen Mittelwerte ebenfalls zufallsabhängig. Somit lässt sich durch Messung mehrerer auf die betreffende Landmarke fallenden Strahlen wieder eine Zufallsfolge gewissermaßen als Fingerabdruck ableiten, die zur Unterscheidung dieser Landmarke von anderen Landmarken dienen kann. Eine solche Zufallsfolge lässt sich z.B. bilden, indem detektiert wird, ob ein jeweiliger Mittelwert größer oder kleiner als ein vorgegebener Schwellwert, z.B. 0.5 ist. Abhängig davon kann jeweils eine 0 bzw. eine 1 zugeordnet werden.

Um die abgetrennten Bandsegmente, hier BS1 und BS2, als Landmarken in der Einsatzumgebung des Roboters anzubringen, weist das Landmarkenband auf seiner Rückseite, d.h. auf der den maschinenlesbaren Strukturen RA und NRA abgewandten Seite eine Klebefolie (nicht dargestellt) als Befestigungsmittel auf. Vorzugsweise ist die Klebefolie mit einer leicht abziehbaren und rückseitig nicht klebenden Schutzfolie versehen. Mittels der Klebefolie können die abgetrennten Landmarken auf einfache Weise auf geeignete Raumelemente, wie Wände, Decken, Türen und/oder andere Gegenstände in der Einsatzumgebung aufgeklebt werden. Alternativ oder zusätzlich zur Klebeschicht kann eine Magnetschicht, ein Klettverschlussband oder ein anderes für eine jeweilige Einsatzumgebung geeignetes Befestigungsmittel vorgesehen sein. Vorzugsweise erstreckt sich die Perforation der Trennstellen TR durch das Befestigungsmittel hindurch, so dass die Landmarken leicht abtrennbar sind.

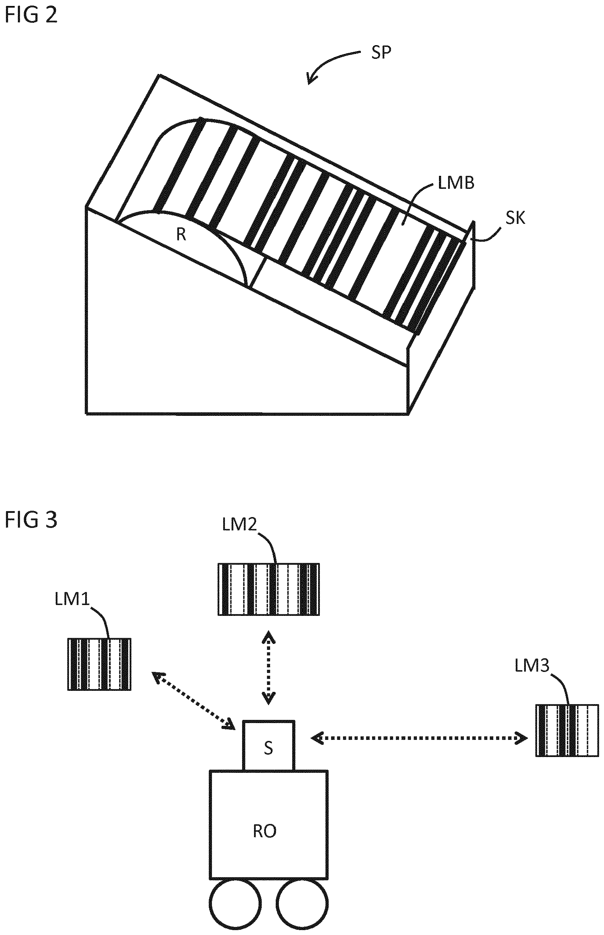

Figur 2 zeigt in schematischer Darstellung einen erfindungsgemäßen Landmarkenspender SP mit einem zu einer Rolle R aufgewickelten Landmarkenband LMB. Die Rolle R ist auf einer Abrolleinrichtung beispielsweise einer Abrollachse des Landmarkenspenders SP angebracht.

Das Landmarkenband LMB weist - wie im Zusammenhang mit Figur 1 beschrieben - eine zufallsverteilte Abfolge von reflektierenden und nicht reflektierenden Bandabschnitten als maschinenlesbare Strukturen auf. Ein Bandsegment, das eine hinreichende Anzahl solcher Bandabschnitte umfasst, kann, wie oben bereits erläutert, als individuelle Kodierung und damit als Landmarke verwendet werden.

Vorzugsweise ist das Landmarkenband auf seiner Rückseite mit einer Klebeschicht als Befestigungsmittel zum Befestigen eines jeweils abgetrennten Bandsegments in der Einsatzumgebung versehen.

Zum Abtrennen von als Landmarken verwendbaren Bandsegmenten des Landmarkenbandes LMB verfügt der Landmarkenspender SP über eine Schneidkante SK als Trennvorrichtung. Das in den Landmarkenspender eingelegte Landmarkenband LMB liegt mit seiner Klebeschicht auf der Schneidkante SK auf und wird durch die Klebeschicht leicht fixiert. Aufgrund der Trennvorrichtung SK kann in vielen Fällen auf Trennstellen im Landmarkenband LMB selbst verzichtet werden.

Mittels der beschriebenen Anordnung kann ein Benutzer auf sehr einfache Weise Bandsegmente des Landmarkenbandes LMB mit ad-hoc wählbarer Länge aus dem Landmarkenspender SP herausziehen, an der Schneidkante SK abtrennen und mittels der Klebeschicht als Landmarken in der Einsatzumgebung anbringen.

Figur 3 zeigt in schematischer Darstellung einen autonomen mobilen Roboter RO beim Navigieren anhand von in seiner Umgebung angebrachten Landmarken LM1, LM2 und LM3. Der Roboter kann beispielsweise ein Fertigungsroboter, ein Transportroboter, ein Tauchroboter oder eine Flugdrohne sein. Alternativ oder zusätzlich kann die Erfindung auch zur Orientierung oder Navigationsunterstützung von anderen sich orientierenden Systemen, wie z.B. autonomen Fahrzeugen oder selbstjustierenden chirurgischen Instrumenten eingesetzt werden.

Der Roboter RO weist zur räumlichen Orientierung, d.h. zur Feststellung seiner eigenen Position und/oder Ausrichtung bezüglich seiner Umgebung, einen Scanner S, vorzugsweise einen Laserscanner und/oder eine Kamera mit einer Objekterkennungseinrichtung auf. Eine Scan-Ebene des Scanners S kann insbesondere vertikal oder horizontal ausgerichtet sein. Vorzugsweise ist der Scanner S schwenkbar ausgestaltet, so dass die Scan-Ebene um die Hochachse oder eine andere Raumachse bewegbar ist.

Die Landmarken LM1, LM2 und LM3 wurden als Bandsegmente von einem erfindungsgemäßen Landmarkenband und/oder einem erfindungsgemäßen Landmarkenspender abgetrennt und in der Umgebung des Roboters RO angebracht. Die Länge der Bandsegmente LM1, LM2 und LM3 wurde dabei - wie oben beschrieben - so gewählt, dass die dargestellten Kodierungen mit hinreichender Wahrscheinlichkeit paarweise unterschiedlich sind. Den Landmarken LM1, LM2 und LM3 kann vorzugsweise jeweils eine Ortsinformation über ihren jeweiligen Anbringungsort zugeordnet sein.

Der Scanner S tastet die Umgebung des Roboters RO ab und erkennt dabei die Landmarken LM1, LM2 und LM3. Durch Auswertung der Scansignale kann der Scanner S eine Richtung, eine Entfernung sowie die individuelle Kodierung der jeweiligen Landmarke LM1, LM2 bzw. LM3 ermitteln. Aus diesen Angaben kann der Roboter RO mit geometrischen Standardmethoden seine Position und Orientierung bezüglich der Landmarken LM1, LM2 und LM3 und damit bezüglich seiner Umgebung ermitteln und zur Navigation verwenden.

Durch die Erfindung kann eine Präparierung einer Einsatzumgebung von mobilen Robotern oder anderen sich orientierenden Systemen erheblich vereinfacht werden. Zudem ist die Erfindung für eine Vielzahl von unterschiedlichen Einsatzumgebungen gleichermaßen geeignet.

## Patentansprüche

1. Landmarkenband (LMB) mit aufgebrachten maschinenlesbaren Strukturen (RA, NRA) zur räumlichen Orientierung von Robotern (RO), Fahrzeugen oder anderen sich orientierenden Systemen, wobei
das Landmarkenband (LMB) eine Vielzahl von Trennstellen (TR) zum Abtrennen von als Landmarken verwendbaren Bandsegmenten (BS1, BS2) wählbarer Größe aufweist, und
die maschinenlesbaren Strukturen (RA, NRA) in zufälliger Weise über das Landmarkenband (LMB) verteilt sind.

2. Landmarkenband nach Anspruch 1, **dadurch gekennzeichnet, dass** das Landmarkenband zu einer Rolle (R) aufgewickelt ist.

3. Landmarkenband nach einem der vorhergehenden Ansprüche, **dadurch gekennzeichnet, dass**
eine geometrische Anordnung, eine geometrische Form, ein geometrisches Muster, eine Reflektivität, eine Leuchtkraft und/oder eine Farbe der maschinenlesbaren Strukturen (RA, NRA) zufallsverteilt ist.

4. Landmarkenband nach einem der vorhergehenden Ansprüche, **dadurch gekennzeichnet, dass**
die maschinenlesbaren Strukturen (RA, NRA) geometrische Muster unterschiedlicher Größe und/oder unterschiedlichen Typs aufweisen.

5. Landmarkenband nach einem der vorhergehenden Ansprüche, **dadurch gekennzeichnet, dass**
die maschinenlesbaren Strukturen (RA, NRA) zwischen benachbarten Trennstellen (TR) befindliche Bandabschnitte mit im Wesentlichen einheitlicher Reflektivität umfassen, wobei die Reflektivitäten verschiedener solcher Bandabschnitte zufallsverteilt sind.

6. Landmarkenband nach einem der vorhergehenden Ansprüche, **dadurch gekennzeichnet,**
**dass** die maschinenlesbaren Strukturen (RA, NRA) wie ein Barcode, ein QR-Code und/oder ein Aruco-Marker ausgestaltet sind.

7. Landmarkenband nach einem der vorhergehenden Ansprüche, **dadurch gekennzeichnet, dass**
die Trennstellen (TR) eine Perforation aufweisen.

8. Landmarkenband nach einem der vorhergehenden Ansprüche, **gekennzeichnet durch**
ein Befestigungsmittel zum Befestigen eines jeweiligen abgetrennten Bandsegments (BS1, BS2) in einer zur räumlichen Orientierung vorgesehenen Umgebung.

9. Landmarkenspender (SP)
- mit einem Landmarkenband (LMB) mit aufgebrachten maschinenlesbaren Strukturen (RA, NRA) zur räumlichen Orientierung von Robotern (RO), Fahrzeugen oder anderen sich orientierenden Systemen,
- mit einer Trennvorrichtung (SK) zum Abtrennen von als Landmarken verwendbaren Bandsegmenten des Landmarkenbandes (LMB), und
- bei dem die maschinenlesbaren Strukturen (RA, NRA) in zufälliger Weise über das Landmarkenband (LMB) verteilt sind.

10. Landmarkenspender (SP) nach Anspruch 9, **dadurch gekennzeichnet,**
**dass** das Landmarkenband (LMB) zu einer Rolle (R) aufgewickelt ist und
**dass** eine Abrolleinrichtung zum Aufnehmen und Abrollen der Rolle (R) vorgesehen ist.

11. Landmarkenspender (SP) nach Anspruch 9 oder 10, **dadurch gekennzeichnet, dass**
das Landmarkenband (LMB) gemäß einem der Ansprüche 1 bis 8 ausgestaltet ist.
